# FASCICULE DE BREVET EUROPEEN

(11) **EP 1 714 130 B1**
(45) Date de publication et mention de la délivrance du brevet: **11.11.2009**
(21) Numéro de dépôt: 05726417.8
(22) Date de dépôt: 09.02.2005
(51) Int. Cl.: G01M 17/02

(54) **BANC DE TEST MOBILE POUR PNEUMATIQUES, ET PROCEDE DE MISE EN OEUVRE D'UN TEL BANC DE TEST**
BEWEGLICHER REIFENPRÜFSTAND UND UMSETZUNGSVERFAHREN DAFÜR
MOVABLE TYRE TEST BENCH AND IMPLEMENTING METHOD THEREFOR

(30) Priorité: 11.02.2004 FR 0450244
(43) Date de publication de la demande: 25.10.2006
(73) Titulaire: AIRBUS France, 31060 Toulouse (FR)
(72) Inventeur: REGIS, Olivier, F-31000 TOULOUSE (FR); LASTERE, Nicolas, F-31320 AUZEVILLE TOLOSANE (FR); SEVELINGE, Gérard, F-71100 CHALON SUR SAONE (FR)
(74) Mandataire: Poulin, Gérard
(86) Numéro de dépôt international: PCT/FR2005/050080
(87) Numéro de publication internationale: WO 2005/078407

(56) Documents cités:
- US-A- 3 483 744
- US-A- 3 977 243
- US-A- 4 238 954

## Description

### DOMAINE TECHNIQUE

La présente invention concerne un banc de test mobile pour pneumatiques, et un procédé de mise en oeuvre d'un tel banc de test.

### ETAT DE LA TECHNIQUE ANTERIEURE

Les fabricants de pneumatiques possèdent des bancs de test pour tester différents paramètres de leurs pneumatiques, tels que la résistance aux chocs, à l'érosion au contact de la route, à la vitesse, à la charge et la déformation en dérapage.

De tels bancs de test peuvent être fixes ou mobile.

Un banc de test fixe est décrit dans le document référencé [1] en fin de description. Dans ce banc de test une roue équipée d'un pneumatique à tester est montée autour d'un axe au dessus d'un tapis roulant plat pour pouvoir .venir au contact avec celui-ci sous des charges déterminées, et avec des possibilités d'ajustements de courbure et de direction. Le tapis roulant actionné par moteur peut ainsi être utilisé pour tester ledit pneumatique en simulant des conditions de route déterminées.

Un banc de test mobile est décrit dans le document référencé [2]. Ce banc de test comprend un tracteur, un châssis articulé relié au tracteur, un mécanisme d'entraînement d'une roue équipée d'un pneumatique à tester dont l'axe est couplé à des éléments de mesure fixés sur le châssis, un mécanisme de compensation du moment réactionnel, des éléments de mesure, des enregistreurs et un dispositif hydraulique d'application des charges sur la roue. Ce banc de test permet de tester ledit pneumatique dans des conditions réelles d'utilisation.

Ce banc de test est adapté à des pneumatiques utilisés sur des voitures, des camions ou des tracteurs. Il permet, en effet de simuler ou reproduire différentes conditions d'utilisation d'un pneumatique, que ce soit en terme de vitesse, de charge ou d'angle de dérapage.

Par contre de tels bancs de test ne permettent pas de reproduire toutes les conditions d'utilisation de pneumatiques montés sur bogie de train d'atterrissage d'aéronef.

Actuellement, les fabricants de tels pneumatiques testent leurs pneumatiques dans les limites d'utilisation de leurs bancs de test et fournissent les données de mesure récoltées aux avionneurs. Ces données peuvent alors être affinées pour être rendues plus représentatives de conditions s'approchant des conditions réelles. On peut ainsi effectuer des premières mesures avec un pneumatique connu, et remplacer ensuite ce pneumatique par un pneumatique à tester. Des secondes mesures peuvent alors être effectuées avec ce pneumatique à tester en essayant de reproduire les premières mesures. La comparaison entre ces différentes mesures permet de mieux connaître le comportement du pneumatique à tester. Néanmoins, il est difficile de reproduire les conditions d'essai à l'identique. De plus, les mesures ne peuvent pas être faites pneumatique par pneumatique pour des raisons d'encombrement et de mise en oeuvre de capteurs. Ces mesures ne sont donc que le reflet d'une moyenne des caractéristiques de tels pneumatiques.

Pour tester en conditions réelles le domaine d'utilisation de leurs pneumatiques, les avionneurs ont, de plus, recours à des techniques d'extrapolation. Pour des raisons de sûreté, ils peuvent être amenés à majorer les données mesurées. De telles données mesurées sont également utilisées pour construire un modèle de simulation du comportement de l'avion dans son ensemble. Un tel surdimensionnement diminue encore plus la représentativité des extrapolations ainsi réalisées.

La présente invention a pour objet un banc de test mobile pour pneumatique, par exemple d'aéronef, et un procédé de mise en oeuvre de celui-ci permettant de résoudre ces différents problèmes.

### EXPOSÉ DE L'INVENTION

L'invention propose un banc de test mobile pour pneumatique, caractérisé en ce qu'il est constitué d'une plate-forme automotrice, apte à suivre des trajectoires rectiligne et circulaire, qui comprend :
- un module instrumenté d'essai d'un ensemble roue-pneumatique à tester qui permet d'orienter cet ensemble dans toutes les directions, de le pencher et d'appliquer un effort vertical sur celui-ci,
- de premiers essieux orientables, équipés de suspensions et de roues motrices,
- une unité de traitement associée à des moyens de mémorisation,
- des moyens de contrôle du cycle d'essais permettant de contrôler l'orientation dudit ensemble, et la charge appliquée à celui-ci.

Avantageusement ce banc de test peut comprendre, en outre, des moyens d'acquisition et de contrôle de trajectoire associés à un système de positionnement, des moyens de communication radio permettant de communiquer avec un poste de commande, et des seconds essieux orientables équipés de suspension et de roues non motrices. Il peut être pilotable à distance. Il peut être transportable.

Dans un mode de réalisation avantageux chaque essieu est équipé de quatre roues. Ledit banc de test comprend huit essieux munis de roues motrices, et quatre essieux munis de roues non motrices. Le module instrumenté comprend un premier vérin permettant de générer les efforts verticaux appliqués au pneumatique à tester, et au moins un second vérin permettant de l'incliner. Deux moteurs diesel entraînent au moins deux pompes hydrauliques, une pour la partie gauche de la plate-forme, une pour la partie droite. Chaque essieu est équipé d'un vérin pour régler la hauteur de la plate-forme. Au moins une caméra permet de suivre la trajectoire du banc de test, et au moins une caméra permet d'apprécier les déformations du pneumatique à tester.

Ledit banc de test comprend des capteurs de traction/compression situés à l'interface de l'axe de la roue équipée du pneumatique à tester et de la fourche qui maintient celle-ci. Il comprend par exemple :
- deux capteurs pour mesurer l'effort longitudinal et le moment autour de l'axe vertical,
- deux capteurs pour mesurer l'effort vertical et le moment autour de l'axe longitudinal,
- un capteur pour mesurer l'effort latéral,
- un capteur pour mesurer le moment autour de l'axe latéral,
- un capteur pour mesurer le couple de freinage.

Ledit banc de test comprend un système de signalisation de type gyrophare, et un avertisseur sonore.

Avantageusement le module instrumenté comprend un vérin assisté par des lests fixes et/ou amovibles permettant de générer les efforts verticaux appliqués sur le pneumatique à tester.

Le banc de test est démontable et formé de trois parties équilibrées: deux demi plates-formes et le module instrumenté, les deux demi plates-formes étant automotrices.

Dans un mode de réalisation avantageux l'ensemble roue-pneumatique à tester est un ensemble roue-pneumatique d'aéronef.

L'invention concerne également un procédé de mise en oeuvre du banc de test précédent comprenant les étapes suivantes :
- une étape de positionnement du banc de test en un endroit d'une piste d'essai,
- une étape d'apprentissage d'une trajectoire idéale du banc de test, à faible vitesse sur l'axe longitudinal de la piste d'essai,
- une ou plusieurs étapes de test comprenant chacune :
   - une phase de mise en vitesse du banc de test,
   - une phase d'essais durant laquelle un enchaînement d'angles de dérapage du pneumatique à tester, préprogrammé et téléchargé sur le banc de test, est lancé,
   - une phase d'arrêt.

Le banc de test de l'invention permet de reproduire l'ensemble des conditions d'utilisation d'un pneumatique à tester, y compris les plus extrêmes en termes de charge verticale, d'angle de dérapage et de vitesse. Ce banc de test permet de tester ce pneumatique directement sur les pistes d'atterrissage : par temps chaud ou froid, sur piste sèche ou dégradée (gel, pluie, ...).

Le banc de test de l'invention permet avantageusement :
- de tester des pneumatiques avion de taille allant jusqu'à 60" (1, 524m),
- de tester un pneumatique sur différents revêtements caractéristiques de pistes aéroportuaires pour des trajectoires rectiligne et/ou circulaire,
- de faire rouler un pneumatique pour différentes vitesses stabilisées (vitesse rectiligne maximale de 90 km/h ; vitesse circulaire maximale de 29,5°/s) ou pour des phases de freinage en trajectoire rectiligne,
- d'appliquer une charge verticale de 1 à 75 tonnes sur un pneumatique, la charge maximale appliquée étant liée au type de pneumatique considéré et pouvant être limitée à 45 tonnes pour des vitesses supérieures à 30 km/h et pour des trajectoires circulaires,
- d'appliquer un angle de dérapage du pneumatique par rapport à la trajectoire de +/- 90° et limité à +/- 30° si la charge verticale est supérieure à 45 tonnes,
- d'appliquer un angle de carrossage du pneumatique par rapport au plan vertical de +/- 5°,
- de tester un pneumatique d'avion posé ne bougeant pas, en chargeant ce pneumatique par exemple de 30 tonnes,
- de tester un pneumatique d'avion au sol en situation de roulage, d'atterrissage ou de décollage à basse vitesse, en chargeant ce pneumatique par exemple de 45 tonnes,
- de tester un pneumatique d'avion au sol à grande vitesse en chargeant ce pneumatique par exemple de 45 tonnes.

Le banc de test permet, également, de simuler un atterrissage. Il permet, enfin, de mesurer tout le système de freinage de l'ensemble roue-pneumatique à tester.

### BRÈVE DESCRIPTION DES DESSINS

La figure 1 illustre une vue schématique du banc de test de l'invention,
La figure 2 illustre une vue de profil schématique du banc de test de l'invention.
La figure 3 illustre une vue de dessus schématique du banc de test de l'invention.
La figure 4 illustre une vue en coupe schématique du banc de test de l'invention selon la section AA indiquée sur la figure 3.

### EXPOSÉ DÉTAILLÉ DE MODES DE RÉALISATION PARTICULIERS

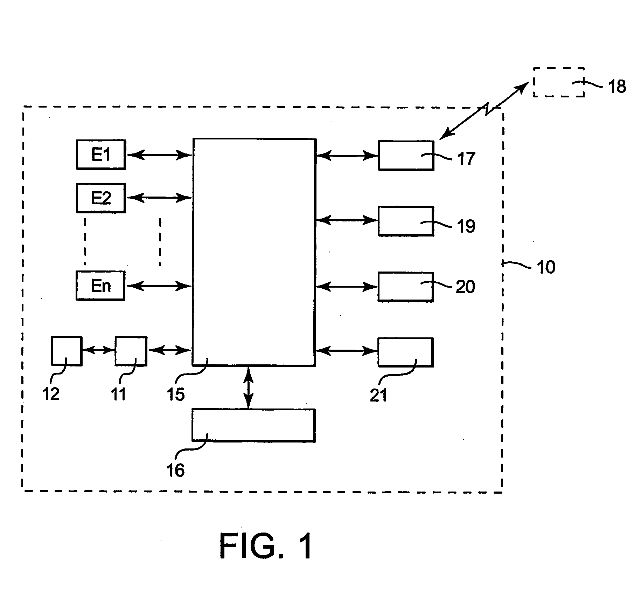

Le banc de test mobile pour pneumatiques, par exemple pour pneumatiques d'aéronef, de l'invention, tel qu'illustré sur la figure 1, est constitué d'une plate-forme 10 automotrice, qui peut être pilotable à distance, apte à suivre des trajectoires rectiligne et circulaire, qui comprend :
- une unité de traitement 15 associée à des moyens de mémorisation 16, qui permet de contrôler les éléments suivants,
- un module instrumenté 11 d'essai d'un ensemble roue-pneumatique 12 à tester qui permet d'orienter cet ensemble 12 dans toutes les directions, de l'incliner (ou de le "carrosser") et d'-appliquer un effort vertical sur celui-ci,
- des essieux suspendus E1...En, orientables, équipés de roues motrices et éventuellement de roues non motrices,
- d'éventuels moyens 17 de communication radio permettant de communiquer avec un poste de commande 18 situé à distance,
- d'éventuels moyens 19 d'acquisition et contrôle de trajectoire associés à un système de positionnement 20,
- des moyens 21 de contrôle d'au moins un cycle d'essais permettant de contrôler l'orientation dudit ensemble roue-pneumatique à tester 12, et la charge appliquée à celui-ci.

Ce banc de test peut avantageusement être transportable, par exemple sur un semi-remorque.

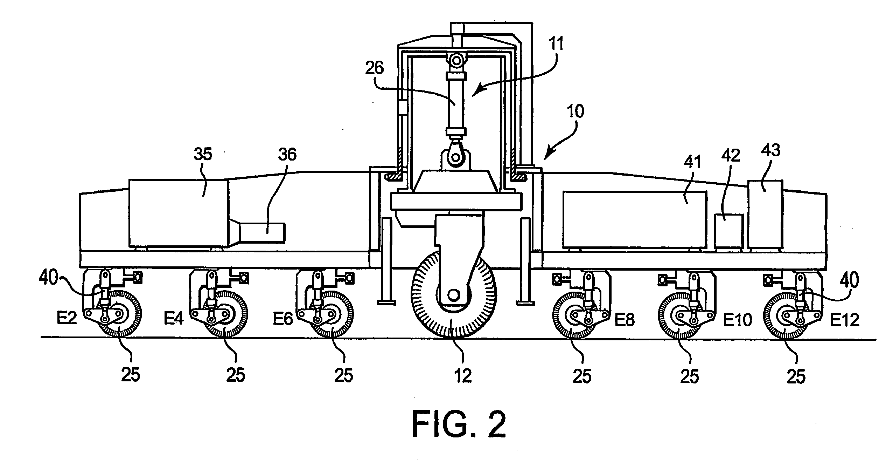

Dans le mode de réalisation illustré sur les figures 2, 3 et 4 les essieux, équipés chacun de quatre roues 25, par exemple de camion, sont au nombre de douze référencés E1 à E12. Dans un autre mode de réalisation on pourrait, à la place de ces douze essieux, utiliser quatre roues d'avion toutes motrices.

Au moins deux de ces essieux, par exemple huit référencés E3, E4, E5, E6, E7, E8, E9 et E10, munis d'engrenages 37, sont des essieux motorisées. Les autres essieux E1 E2, E11 et E12 sont des essieux non motorisés.

Le module instrumenté 11 comprend un premier vérin 26 permettant de générer des efforts verticaux appliqués au pneumatique à tester 12, et au moins un second vérin 27 permettant de l'incliner.

Des engrenages 30 et 31 sur couronne 32 permettent d'orienter le pneumatique à tester 12 dans toutes les directions.

Deux moteurs diesel 35 entraînent au moins deux pompes hydrauliques 36 : une pour la partie gauche de la plate-forme 10, une autre pour la partie droite pour transmettre le mouvement aux essieux moteurs au moyen de moteurs hydrauliques 37.

Une boucle de régulation permet de commander l'orientation des essieux E1 à E12 à l'aide de vérins 39. Chacun de ces essieux possède, en outre, un système de suspension permettant de régler à l'aide d'un vérin 40 la hauteur de la plate-forme 10. Des roues d'appui, par exemple au nombre de huit, non représentées sur les figures peuvent être également prévues.

Différents autres éléments sont également illustrés sur la figure 2, à savoir :
- une bâche hydraulique 41 qui contient le fluide du circuit hydraulique en réserve, et qui sert de tampon en température,
- un système de refroidissement d'huile 42,
- une armoire électrique 43 qui alimente tous les moyens de contrôle.

Au centre de la plate-forme, se trouve le module instrumenté 11 comportant le pneumatique à tester 12. Lors de manoeuvre de dérapage, les roues non motrices sont orientées de telle sorte qu'elles génèrent un effort latéral s'opposant à l'effort latéral généré par l'ensemble roue-pneumatique à tester.

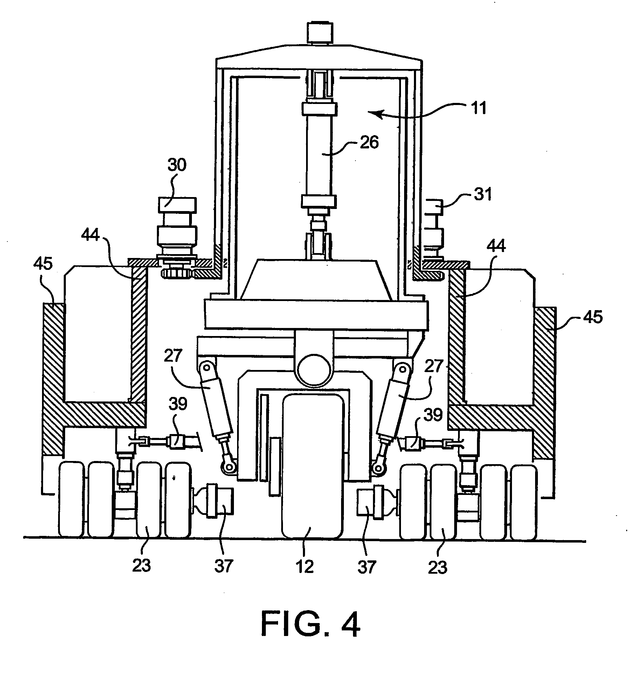

Les efforts verticaux appliqués sur le pneumatique à tester sont engendrés par le premier vérin 26 assisté par des lests fixes ou amovibles 44 et 45 illustrés sur la figure 4.

Le banc de test de l'invention permet de mesurer les efforts générés par le pneumatique au contact pneumatique/sol.

Les grandeurs mesurées par le banc de test sont :
- le torseur des efforts au centre de l'ensemble roue-pneumatique à tester dans un repère roue,
- la trajectoire réelle du banc de test,
- l'angle réel de dérapage,
- l'angle réel de carrossage,
- le couple de freinage de là roue équipée du pneumatique à tester,
- la température du dispositif de freinage,
- la charge verticale appliquée sur le pneumatique à tester,
- les déformations du pneumatique à tester obtenues à l'aide de caméras,
- la pression du pneumatique à tester.

Le problème d'encombrement qui existait sur les bancs de test de l'art antérieur pour la fixation de capteurs n'existe plus. Le banc de test de l'invention possède toute la place nécessaire pour être équipé de capteurs.

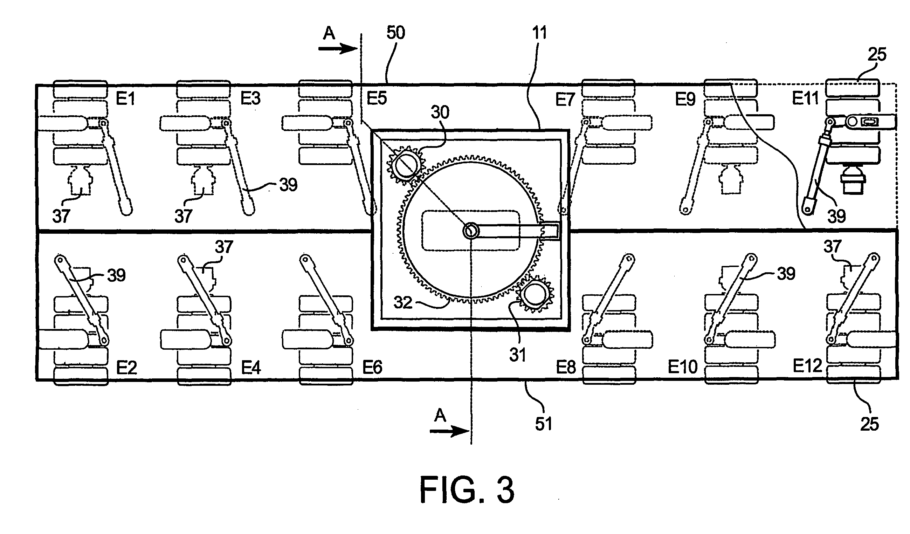

Ce banc de test peut être démontable en trois parties (demi plate-forme 50, demi plate-forme 51 et module instrumenté 11) illustrées sur la figure 3, de manière à permettre un déplacement aisé de celui-ci. Ces trois parties sont équilibrées afin qu'aucune ne risque de basculer.

Un procédé de mise en oeuvre du banc de test de l'invention comprend les étapes suivantes :
- une étape de positionnement du banc de test en un endroit d'une piste d'essai, après assemblage entre elles des différentes parties de celui-ci,
- une étape d'apprentissage d'une trajectoire "idéale", par déplacement à faible vitesse du banc de test le long de l'axe longitudinal de la piste, avec une acquisition des points de cette trajectoire en utilisant un système de positionnement par exemple de type GPS ("Global Positionning System"),
- une ou plusieurs étapes de test comprenant chacune :
   - une phase de mise en vitesse du banc de test, durant laquelle un angle de carrossage et une charge verticale peuvent être appliqués sur le pneumatique à tester, un angle de dérapage nul étant fixé, le banc de test étant accéléré jusqu'à une vitesse de consigne.
   - une phase d'essais durant laquelle à l'atteinte de la vitesse de test, un enchaînement d'angles de dérapage, préprogrammé et téléchargé sur le banc de test, est lancé par paliers de maintien de l'angle de dérapage de consigne pendant des durées données avec freinage ou non de la roue équipée du pneumatique à tester,
   - une phase d'arrêt, qui consiste en un freinage des moteurs hydrauliques, et une remise à zéro de l'angle de dérapage.

En cas de défaillance de l'un des moteurs hydrauliques, le freinage de la roue équipée du pneumatique à tester est également actionné. Durant cette phase d'arrêt, les moyens de contrôle assurent le maintien du banc de test sur la trajectoire "idéale". Un arrêt de sécurité peut être déclenché automatiquement lorsqu'un risque de sortie de piste est identifié par les moyens de contrôle ou l'opérateur de supervision.

### Exemple d'un mode de réalisation avantageux

Dans ce mode de réalisation, le banc de test de l'invention comprend une plate-forme automotrice constituée de deux demi plates-formes situées de part et d'autre du module instrumenté.

Ce banc de test peut être défini de la façon suivant

### 1) Principales caractéristiques

Ce banc d'essai est équipé de douze essieux suspendus, orientables ; chaque essieu étant équipé de quatre pneumatiques de type "Michelin 245/70 R17,5 XTE2", gonflés à l'azote.

Deux automates programmables commandent chaque distributeur d'orientation par une carre d'axe, ayant comme retour de mesure un codeur absolu monté sur l'essieu considéré.

Le banc de test assemblé présente une longueur de 14 m, une largeur de 4 , 5 m et une hauteur de 5,5 m. Son poids varie, suivant la présence de lest ou non, de 60 tonnes à 190 tonnes.

Ce banc de test démonté est composé notamment des parties suivante
- deux demi plates-formes ayant les caractéristiques suivantes :
   poids < 35 tonnes,
   longueur : 14 mètres,
   largeur : 2,4 m,
   hauteur < 3,7 m ;
- Un module instrumenté (partie basse) ayant les caractéristiques suivante
   poids < 10 tonnes,
   longueur : 2,3 m,
   largeur : 2 m,
   hauteur < 3 m.
- Un module instrumenté (partie haute) ayant les caractéristiques suivante
   poids < 15 tonnes,
   longueur : 3 m,
   largeur : 3 m,
   hauteur < 3,5 m ;
- Des lests "poids mortes" constitués de plaques d'acier de poids unitaire de 4,5 tonnes environ, chaque plaque ayant les dimensions suivante hauteur : 0, 2 m ; longueur : 2, 85 m ; largeur : 1 m ; ces plaques formant deux lots de 27,5 tonnes (Poids < 55 tonnes).
- Un poste de contrôle ayant les caractéristiques suivantes :
   poids < 2 tonnes,
   longueur : 4,41 m,
   largeur: 2,44 m,
   hauteur < 2,61 m.

### 2) Motorisation

Ce banc de test est motorisé à l'aide de deux moteurs thermiques qui actionnent deux pompes hydrauliques. Ces pompes entraînent huit moteurs hydrauliques à transmission de puissance à régulation secondaire sur les essieux moteurs. La pression dans le circuit hydraulique est maintenue à une valeur quasi-constante. Il n'y a donc plus de variation de volume due à la compressibilité du fluide utilisé. La fréquence propre d'un ensemble moteur réducteur de transmission de puissance est pratiquement rejetée à l'infini. On peut donc faire une régulation de vitesse dynamique avec rapidité et précision.

On utilise des pompes à pistons à cylindrée variable auto-régulatrices (maintien de pression, annulation de débit).

Les moteurs sont des moteurs à cylindrée variable qui présentent les avantages suivants. Ils sont utilisés pour le mouvement de translation avant et arrière de la plate-forme par simple inversion de la cylindrée et également pour le freinage de celle-ci. Dans la phase de freinage, on procède également à l'inversion de la cylindrée des moteurs, celle des pompes étant ramenée à zéro. Les moteurs fonctionnent alors en pompes et l'énergie est dégradée sur des limiteurs de pression.

La cylindrée des moteurs est réglée à chaque instant grâce à une boucle d'asservissement de vitesse. La consigne de vitesse est élaborée en fonction de l'essai à réaliser.

### 3) Contrôle

Le contrôle du banc de test permet d'atteindre trois objectifs :
- le pilotage de la plate-forme avec fourniture de toute information concernant le fonctionnement de celle-ci (alarme, alerte, etc.),
- le pilotage complet et autonome d'un cycle d'essais sous surveillance humaine et contrôle automatique,
- la sécurité des personnes et des biens lors des essais.

Le banc de test est ainsi caractérisé par l'absence d'opérateur humain embarqué. Lors des essais, le système est piloté par deux automates embarqués et suit une trajectoire "idéale". Situé à distance dans un poste de commande, un opérateur dispose d'un terminal de conduite permettant la sélection des modes de marche et de fonction, d'un palonnier ("joystick") analogique avec deux axes translation/direction et de deux boutons poussoirs de départ et d'arrêt d'essai.

La communication entre le poste de commande et la plate-forme est assurée par des liaisons radio indépendantes permettant :
- une transmission de conduite et de mesure intégrant des voies de transmission vidéo,
- une transmission de sécurité (commandes prioritaires).

Les essieux de la plate-forme sont regroupés en quatre groupes de trois essieux: un groupe avant-gauche, un groupe avant-droit, un groupe arrière-gauche et un groupe arrière-droit.

Pour les trajectoires rectilignes, les essieux d'un même groupe sont liés mécaniquement par des barres de liaison. Ils ont ainsi la même consigne d'orientation, qui est la moyenne des consignes de fonctionnement indépendant.

Un essai d'apprentissage de la trajectoire idéale est réalisé au début de chaque campagne d'essais à faible vitesse sur l'axe longitudinal de la piste. Un système DGPS ("Differential Global Positionning System") permet l'acquisition des points de cette trajectoire et la détermination du cap de la piste.

Lors des essais rectilignes, les automates programmables ont la connaissance, grâce aux mesures DGPS et aux mesures du vélocimètre, de la trajectoire réelle et du cap suivi. En comparaison avec les mesures de l'essai d'apprentissage, le contrôle détermine automatiquement les angles correctifs à appliquer sur chacun des groupes d'essieux afin de ramener le banc d'essais sur la trajectoire "idéale".

Ce banc de test permet également de réaliser une simulation d'atterrissage, qui a pour but de mettre en contact le pneumatique à tester avec le sol pour des vitesses de translation de la plate-forme supérieure à 55 km/h et une vitesse verticale d'impact de l'ordre de 3m/s.

Une séquence d'essais spécifique peut alors être décomposée en trois phases :
- une phase de mise en vitesse du banc de test durant laquelle les angles de carrossage sont fixés à zéro, aucune charge verticale n'étant appliquée sur le pneumatique à tester, le banc de test étant accéléré jusqu'à la vitesse consigne,
- une phase d'essais durant laquelle un angle de dérapage peut être appliqué sur le pneumatique à tester dans un domaine limité à +/-10°, à l'atteinte de la vitesse de test, la roue équipée du pneumatique à tester étant mise en contact avec le sol à une vitesse verticale de 3 m/s, Un enchaînement d'angles de dérapage, préprogrammé et téléchargé sur le banc de test, pouvant ensuite être lancé par paliers de maintien de l'angle de dérapage consigne pendant des durées données avec freinage ou non de cette roue,
- une phase d'arrêt, qui consiste en un freinage des moteurs hydrauliques, et une remise à zéro de l'angle de dérapage.

L'ensemble roue-pneumatique à tester est équipé du dispositif de freinage existant réellement sur l'avion ce qui permet de tester ce dispositif, et notamment le système anti-blocage.

### 4) Supervision d'un essai

Au début d'un essai, un écran de relecture des données d'une séquence d'essai (cinématique de la plate-forme, commande de mise en dérapage, etc...) permet au superviseur des essais dans le poste de commande de valider cette séquence préalablement à la réalisation de l'essai (en tenant compte de son expérience ou des événements précédents). Une telle simulation permet de confirmer l'adéquation de la séquence avec la piste d'essais.

La séquence d'essai est alors téléchargée, par transmission radio, dans l'automate programmable de chacune de deux demi plates-formes. L'un des automates est considéré comme "maître" et l'autre comme "esclave". L'opérateur lance l'essai en appuyant sur un bouton poussoir départ. L'automate programmable "maître" procède à l'enchaînement de la séquence d'essai. Le contrôle dynamique de trajectoire agit directement sur les angles de braquage des roues de la plate-forme pour contrer l'effort latéral généré par l'orientation en dérapage de la roue équipée du pneumatique à tester. Il garantit alors un suivi optimum de trajectoire imposée par l'opérateur en gardant une vitesse constante si la puissance installée le permet (sinon la vitesse sera subie).

Pendant toute la réalisation de la séquence d'essai, l'opérateur observe la trajectoire suivie à l'aide de caméras installées sur le banc de test. Des caméras, également disposées sur le banc de test, permettent d'apprécier les déformations du pneumatique à tester. En cas de déviation de trajectoire, l'opérateur peut, depuis le poste de commande, corriger cette trajectoire à l'aide du palonnier. Une liaison vidéo spécifique assure la communication entre le système vidéo embarqué et la baie vidéo installée dans le poste de commande. L'opérateur peut afficher sur son écran l'image d'une ou de plusieurs caméras. Il n'est donc pas nécessaire de disposer d'un « véhicule suiveur» du banc de test.

En cours de déplacement, des informations d'état des capteurs et des actionneurs de conduite sont transmises au poste de commande afin de permettre au superviseur de suivre sur un écran l'évolution des grandeurs mesurées.

L'automate programmable "maire" peut être informé de la perte de la liaison sécuritaire par la mise à zéro des signaux (retard réglable de 0,5 à 4 s pour inhiber les micro-coupures éventuelles) et peut alors déclencher une procédure d'arrêt du banc de test suivant des modalités prédéfinies.

L'annulation d'un essai et la procédure d'arrêt du banc de test peuvent également être déclenchées par l'opérateur depuis le poste de commande à l'aide d'un bouton poussoir arrêt et transmis par le système de sécurité.

Des procédures automatiques de sécurité sont mises en oeuvre dans les automates programmables pour limiter les situations critiques lors des essais notamment avec une limitation de l'angle de dérapage des roues de la plate-forme en fonction de la vitesse de celle-ci, une limitation de correction brutale de trajectoire, une limitation de la durée d'essai pour des angles importants de dérapage de la roue équipée du pneumatique à tester.

En complément des mesures relatives au pneumatique à tester, différentes grandeurs sont mesurées afin de permettre un contrôle dynamique du banc de test et une supervision de l'essai dans le poste de commande, à savoir :
- la vitesse de déplacement du banc de test,
- la distance parcourue par celui-ci,
- les accélérations longitudinale et latérale celui-ci,
- l'assiette de la plate-forme (roulis et tangage),
- la hauteur de la plate-forme,
- la trajectoire réelle de la plate-forme,
- la cap de la plate-forme.

### 5) Modes de marche/conduite

Différents mode de marche/conduite ont été définis :
- Un mode découplé, durant lequel chaque demi plate-forme est automotrice et possède un automate : En phase de montage/démontage, les deux demi plates-formes sont découplées et se pilotent indépendamment par un pupitre de commande local. Dans ce mode, seuls les mouvements de translation et de direction sont autorisés à faible vitesse. En phase de montage, une fois les deux demi plates-formes assemblées autour du module instrumenté, des câbles d'inter-liaison sont connectés, le banc étant alors déclaré assemblé. Le mode découplé est alors interdit et seul le pupitre de l'automate "maître" est utilisable.
- Un mode manuel local, durant lequel le pupitre relié à l'automate "maître" permet d'accéder à tous les mouvements réalisables par le banc de test. Le pupitre est mobile et est raccordé à l'armoire électrique par un câble de 3m environ. Il permet une mise en marche ou hors service du banc de test, une translation avant/arrière, des rotations gauche/droite de la direction (avec un afficheur de l'angle de rotation des essieux de la plate-forme, le réglage en hauteur de la plate-forme et de la roue équipée du pneumatique à tester). Les mouvements de translation et de direction sont limités à de faibles vitesses.
- Un mode manuel distant, qui est un mode similaire au précédent mais piloté directement depuis le poste de commande.
- Un mode automatique, qui est le mode d'utilisation du banc de test pour réaliser les essais sur le pneumatique à tester.

### 6) Interface homme/machine

Dans le poste de commande, l'opérateur dispose d'un terminal informatique de type PC ("Personnal Computer") pour assurer l'interface de conduite, qui permet :
- un paramétrage et un suivi du profil d'essais,
- un choix du mode marche/conduite,
- un affichage sur synoptique des états et valeurs des capteurs et actionneurs de conduite,
- un compte rendu des défauts et alarmes.

L'opérateur dispose aussi d'un terminal informatique de type PC pour assurer l'interface de mesure, qui permet :
- de stocker les données acquises sur le banc de test, certaines données étant cependant transmises au poste de commande par radio afin de permettre une supervision en temps réel de l'essai,
- de mémoriser, à la fin de l'essai, les données recueillies sur un support d'information.

Une baie vidéo assure des fonctions :
- d'acquisition des images transmises par radio depuis les caméras embarquées,
- d'affichage sur un écran couleur en multivision ou en plein écran,
- de commander un réglage zoom, site et azimut de chaque caméra.

### 7) Instrumentation

La détermination du torseur des efforts générés par le pneumatique à tester est réalisée par une instrumentation spécifique située au plus près du centre de la roue équipée du pneumatique à tester, où l'on souhaite calculer le torseur. Des capteurs de traction/compression sont situés à l'interface de l'axe de la roue équipée du pneumatique à tester et de la fourche qui maintient cette roue, par exemple :
- deux capteurs pour mesurer l'effort longitudinal et le moment autour de l'axe vertical (couple d'auto-alignement),
- deux capteurs pour mesurer l'effort vertical et le moment autour de l'axe longitudinal,
- un capteur pour mesurer l'effort latéral,
- un capteur pour mesurer le moment autour de l'axe latéral,
- un capteur pour mesurer le couple de freinage.

Des codeurs sont utilisés sur différentes pièces du banc de test afin de déterminer différentes grandeurs (course des vérins d'orientation, vitesse des roues de la plate-forme, etc.) permettant de réaliser un contrôle dynamique du banc de test.

Suivant la séquence d'essais réalisée, des gammes de capteurs interchangeables sont disponibles afin de mesurer, avec la meilleure précision possible, les efforts développés par le pneumatique à tester.

### 8) Assemblage du banc

Le module instrumenté est constitué de deux entités particulières :
- une fourche qui permet de positionner la roue équipée du pneumatique à tester dans différentes configurations angulaires et dans laquelle sont situés les capteurs d'efforts à mesurer, la couronne d'orientation en angle de dérapage étant liée à la fourche,
- une partie de forme cylindrique, située au-dessus de la fourche, qui est constituée du vérin qui permet à la fois de régler en hauteur la fourche et d'appliquer l'effort vertical.

Une grue est nécessaire afin d'assurer la manutention et l'assemblage de ce module et des deux demi plates-formes.

Le module instrumenté est alors encadré par les deux demi plates-formes automotrices. Elles sont tout d'abord boulonnées entre elles sur toute la longueur du banc d'essais. Puis elles sont boulonnées à ce module.

Ladite grue est également nécessaire pour la manutention du lest à appliquer alors sur la plate-forme. La quantité de lest à installer est liée à la séquence de test choisie.

### 9) Signalisation-éclairage

Le banc de test est équipé d'un système de signalisation de type gyrophare d'indication de marche et éventuellement d'un avertisseur sonore.

Le banc de test est équipé de deux projecteurs de 300 W et de tubes fluorescents dans les armoires électriques.

### REFERENCES

[1] US 4 238 954
[2] RU 2 085 891

## Revendications

1. Banc de test mobile pour pneumatiques, constitué d'une plate-forme (10) automotrice, apte à suivre des trajectoires rectiligne et circulaire, et comprenant :
- un module instrumenté (11) d'essai d'un ensemble roue-pneumatique à tester (12) qui permet d'orienter cet ensemble dans toutes les directions, de le pencher et d'appliquer un effort vertical sur celui-ci,
- des premiers essieux orientables, équipés de suspensions et de roues motrices,
- une unité de traitement (15) associée à des moyens de mémorisation (16),
- des moyens (21) de contrôle du cycle d'essais permettant de contrôler l'orientation dudit ensemble, et la charge appliquée à celui-ci,

2. Banc de test selon la revendication 1, qui comprend des moyens d'acquisition et de contrôle de trajectoire associés à un système de positionnement (20).

3. Banc de test selon l'une quelconque des revendications 1 ou 2, qui est pilotable à distance.

4. Banc de test selon la revendication 3, qui comprend des moyens de communication radio (17) permettant de communiquer avec un poste de commande (18).

5. Banc de test selon la revendication 1, qui est transportable.

6. Banc de test selon l'une quelconque des revendications précédentes, qui comporte des seconds essieux orientables, équipés de suspensions et de roues non motrices.

7. Banc de test selon l'une quelconque des revendications 1 ou 6, dans lequel chaque essieu est équipé de quatre roues.

8. Banc de test selon la revendication 7, qui comprend huit essieux munis de roues motrices (E3-E10), et quatre essieux munis de roues non motrices (E1 E2, E11, E12).

9. Banc de test selon la revendication 1, dans lequel le module instrumenté (11) comprend un premier vérin (26) permettant de générer les efforts verticaux appliqués au pneumatique à tester et au moins un second vérin (27) permettant de l'incliner.

10. Banc de test selon la revendication 1, qui comprend deux moteurs diesel (35) entraînant au moins deux pompes hydrauliques (36), une pour la partie gauche de la plate-forme, une pour la partie droite.

11. Banc de test selon l'une quelconque des revendications 1 ou 6, dans lequel chaque essieu est équipé d'un vérin (40) pour régler la hauteur de la plate-forme.

12. Banc de test selon la revendication 1, qui comprend au moins une caméra permettant de suivre la trajectoire, et au moins une caméra permettant d'apprécier les déformations du pneumatique à tester.

13. Banc de test selon la revendication 1, qui comprend des capteurs de traction/compression situés à l'interface de l'axe de la roue équipée du pneumatique à tester et de la fourche qui maintient celle-ci.

14. Banc de test selon la revendication 8, qui comprend :
• deux capteurs pour mesurer l'effort longitudinal et le moment autour de l'axe vertical,
• deux capteurs pour mesurer l'effort vertical et le moment autour de l'axe longitudinal,
• un capteur pour mesurer l'effort latéral,
• un capteur pour mesurer le moment autour de l'axe latéral,
• un capteur pour mesurer le couple de freinage.

15. Banc de test selon la revendication 1, qui comprend un système de signalisation de type gyrophare, et un avertisseur sonore.

16. Banc de test selon la revendication 1, dans lequel le module instrumenté (11) est situé au centre de la plate-forme.

17. Banc de test selon la revendication 1, dans lequel le module instrumenté comprend un vérin (26) assisté par des lests fixes et/ou amovibles (44, 45) permettant de générer les efforts verticaux appliqués sur le pneumatique à tester.

18. Banc de test selon l'une quelconque des revendications précédentes, qui est démontable et formé de trois parties équilibrées : deux demi plates-formes (50, 51) et le module instrumenté (11).

19. Banc de test selon la revendication 18, dans lequel les deux demi plates-formes (50,51) sont automotrices.

20. Banc de test selon l'une quelconque des revendications précédentes, dans lequel l'ensemble roue-pneumatique à tester (12) est un ensemble roue-pneumatique d'aéronef.

21. Procédé de mise en oeuvre du banc de test selon l'une quelconque des revendications précédentes comprenant les étapes suivantes:
- une étape de positionnement du banc de test en un endroit d'une piste d'essai,
- une étape d'apprentissage d'une trajectoire idéale, par déplacement à faible vitesse du banc de test le long de l'axe longitudinal de la piste, avec une acquisition des points de cette trajectoire en utilisant le système de positionnement,
- une ou plusieurs étapes de test.

22. Procédé selon la revendication 21, dans lequel chaque étape de test comprend :
• une phase de mise en vitesse du banc de test,
• une phase d'essai durant laquelle un enchaînement d'angles de dérapage du pneumatique à tester, préprogrammé et téléchargé sur le banc de test, est lancé,
• une phase d'arrêt.

## Claims

1. Mobile test rig for tyres, composed of a self-driven platform (10), capable of following rectilinear and circular trajectories, and comprising:
- a instrument module (11) for testing a wheel-tyre assembly to be tested (12) which permits this assembly to be orientated in all directions, to lean it and to apply a vertical effort to it,
- first swivelling axles, equipped with suspensions and driving wheels,
- a processing unit (15) associated to memory means (16),
- means (21) for contr_olling the test cycle permitting the orientation of the said assembly, and the load applied to it to be controlled,

2. Test rig of claim 1, which comprises acquisition and trajectory control means associated to a positioning system (20).

3. Test rig according to any of claims 1 or 2, which can be piloted remotely.

4. Test rig of claim 3, which comprises radio communication means (17) permitting communication with a control unit (18).

5. Test rig of claim 1, which can be transported.

6. Test rig according to any of the previous claims, which comprises second swivelling axles, equipped with suspensions and non driving wheels.

7. Test rig according to any of claims 1 or 6, in which each axle is equipped with four wheels.

8. Test rig of claim 7, which comprises eight axles equipped with driving wheels (E3-EIO), and four axles equipped with non driving wheels (E1, E2, E11, E12).

9. Test rig of claim 1, in which the instrument module (11) comprises one first actuator (26) permitting the vertical efforts applied to the tyre to be tested to be generated and at least one second actuator (27) permitting it to be leant.

10. Test rig of claim 1, which comprises two diesel motors (35) driving at least two hydraulic pumps (36), one for the left part of the platform, one for the right part.

11. Test rig according to any of claims 1 or 6, in which each axle is equipped with an actuator (40) for adjusting the height of the platform.

12. Test rig of claim 1, which comprises at least one camera permitting the trajectory to be monitored, and at least one camera permitting the deformations of the tyre to be tested to be assessed.

13. Test rig of claim 1, which comprises traction/compression sensors situated at the interface of the spindle of the wheel equipped with the tyre to be tested and the fork holding it.

14. Test rig of claim 8, which comprises:
• two sensors to measure the longitudinal effort and the moment around the vertical axis,
• two sensors to measure the vertical effort and the moment around the longitudinal axis,
• one sensor to measure the lateral effort,
• one sensor to measure the moment around the lateral axis,
• one sensor to measure the braking torque.

15. Test rig of claim 1., which comprises a flashing light type signal system, and a siren.

16. Test rig of claim 1, in which the instrument module (11) is situated in the centre of the platform.

17. Test rig of claim 1, in which the instrument module comprises an actuator (26) assisted by fixed and/or removable ballasts (44, 45) permitting the vertical efforts applied to the tyre to be tested to be generated.

18. Test rig according to any of the previous claims, which can be dismantled and that is formed by three balanced parts: two half platforms (50, 51) and the instrument module (11).

19. Test rig of claim 18, in which the two half platforms (50, 51) are self-driven.

20. Test rig according to any of the previous claims, in which the wheel-tyre assembly to be tested (12) is an aircraft wheel-tyre assembly.

21. Implementation process of the test rig according to any of the previous claims comprising the following steps:
- a step for positioning the test rig in one position of a test track,
- a step for learning an ideal trajectory, by moving the test rig at low speed along the longitudinal axis of the track, with acquisition of the points of this trajectory using the positioning system,
- one or more test steps.

22. Process of claim 21, in which each step of the test comprises:
• a phase of speeding up the test rig,
• a test phase during which a series of skid angles of the tyre to be tested, pre-programmed and uploaded onto the test rig, is launched,
• a stop phase.

## Patentansprüche

1. Beweglicher Prüfstand für Reifen, der aus einer selbstfahrenden Arbeitsbühne, die geradlinigen und kreisförmigen Bewegungslinien folgen kann, aufgebaut ist und die folgenden Komponenten umfasst:
- ein Instrumentenmodul (11) zur Prüfung einer zu testenden Rad-Reifen-Anordnung (12), das es möglich macht, diese Anordnung in alle Richtungen auszurichten, sie schrägzustellen und eine vertikale Kraft auf diese auszuüben,
- erste verstellbare Achsen, die mit Lagern und Antriebsrädern ausgestattet sind,
- eine Behandlungseinheit (15), die mit Speichermitteln (16) in Verbindung steht,
- Mittel (21) zur Steuerung des Prüfungszyklus, die es ermöglichen, die Ausrichtung der Anordnung und die darauf ausgeübte Belastung zu steuern.

2. Prüfstand nach Anspruch 1, der Mittel zur Erlangung und Steuerung der Bewegungslinie, die mit einem Positionierungssystem (20) in Verbindung stehen, umfasst.

3. Prüfstand nach einem der Ansprüche 1 oder 2, der fernsteuerbar ist.

4. Prüfstand nach Anspruch 3, der Funkverbindungsmittel (17) umfasst, die eine Verbindung mit einer Leitstelle (18) ermöglichen.

5. Prüfstand nach Anspruch 1, der transportfähig ist.

6. Prüfstand nach einem der vorhergehenden Ansprüche, der zweite ausrichtbare Achsen umfasst, die mit Lagern und Nicht-Antriebsrädern ausgestattet sind.

7. Prüfstand nach einem der Ansprüche 1 oder 6, wobei jede Achse mit vier Rädern ausgestattet ist.

8. Prüfstand nach Anspruch 7, der acht Achsen, die mit Antriebsrädern (E3-E10) versehen sind und vier Achsen, die mit Nicht-Antriebsrädern (EI, E2, E11, E12) versehen sind, umfasst.

9. Prüfstand nach Anspruch 1, wobei das Instrumentenmodul (11) einen ersten Zylinder (26), der die Erzeugung von auf den zu testenden Reifen ausgeübten vertikalen Kräften ermöglicht, und mindestens einen zweiten Zylinder (27), der dessen Schrägstellung ermöglicht, umfasst.

10. Prüfstand nach Anspruch 1, der zwei Dieselmotoren (35) umfasst, die mindestens zwei hydraulische Pumpen (36), eine für den linken Teil der Arbeitsbühne, eine für den rechten Teil, antreiben.

11. Prüfstand nach einem der Ansprüche 1 oder 6, wobei jede Achse mit einem Zylinder (40) zur Regelung der Höhe der Arbeitsbühne ausgestattet ist.

12. Prüfstand nach Anspruch 1, der mindestens eine Kamera, 1 die eine Verfolgung der Bewegungslinie ermöglicht, und mindestens eine Kamera, die die Feststellung der Verformungen des zu testenden Reifens ermöglicht, umfasst.

13. Prüfstand nach Anspruch 1, der Zug/Druckfühler umfasst, die sich an der Grenzfläche der Achse des Rades, das mit dem zu testenden Reifen ausgestattet ist, und der Gabel, die dieses hält, befinden.

14. Prüfstand nach Anspruch 8, der die folgenden Komponenten umfasst:
• zwei Fühler zur Messung der Längskraft und des Moments um die vertikale Achse,
• zwei Fühler zur Messung der Vertikalkraft und des Moments um die Längssachse,
• einen Fühler zur Messung der seitlichen Kraft,
• einen Fühler zur Messung des Moments um die seitliche Achse,
• einen Fühler zur Messung des Bremsmoments .

15. Prüfstand nach Anspruch 1, der ein Signalisierungssystem nach Art eines Rundumlichts und ein tönendes Warnsignal umfasst.

16. Prüfstand nach Anspruch 1, wobei sich das Instrumentenmodul (11) in der Mitte der Arbeitsbühne befindet.

17. Prüfstand nach Anspruch 1, wobei das Instrumentenmodul einen Zylinder (26) umfasst, der von festen und/oder abnehmbaren Belastvorrichtungen (44, 45) unterstützt wird, die die Erzeugung der vertikalen Kräfte, die auf den zu testenden Reifen ausgeübt werden, ermöglichten.

18. Prüfstand nach einem der vorhergehenden Ansprüche, der auseinandernehmbar ist und aus drei ausbalancierten Teilen gebildet ist: zwei Halb-Arbeitsbühnen (50, 51) und dem Instrumentenmodul (11).

19. Prüfstand nach Anspruch 18, wobei die zwei Halb-Arbeitsbühnen (50, 51) selbstfahrend sind.

20. Prüfstand nach einem der vorhergehenden Ansprüche, wobei die zu testenden Rad-Reifen--Anordnung (12) eine Rad-Reifen-Anordnung eines Luftfahrzeugs ist.

21. Verfahren zum Betreiben des Prüfstands nach einem der vorhergehenden Ansprüche, das die folgenden Schritte umfasst:
- einen Schritt der Positionierung des Prüfstands am Ort einer Versuchspiste,
- einen Schritt der Feststellung einer idealen Bewegungslinie durch Verschieben des Prüfstands entlang der Längsachse der Piste mit geringer Geschwindigkeit, wobei unter Verwendung des Positionierungssystems die Punkte dieser Bewegungslinie erhalten werden,
- einen oder mehrere Prüfschritte.

22. Verfahren nach Anspruch 21, wobei jeder Prüfschritt umfasst:
• eine Phase der Geschwindigkeitsaufnahme des Prüfstands
• eine Prüfphase, während der ein Zusammenhang der Winkel des Ausbrechens des zu testenden Reifens, der vorprogrammiert und an den Prüfstand fernübertragen wird, gesendet wird,
• eine Stillstandsphase.
